(19) Europäisches Patentamt European Patent Office Office européen des brevets

(11) **EP 3 419 158 B1**

(12) **EUROPEAN PATENT SPECIFICATION**

(45) Date of publication and mention of the grant of the patent:
**27.04.2022 Bulletin 2022/17**

(51) International Patent Classification (IPC):
**H02M 7/12** (2006.01)  **H02M 3/155** (2006.01)
**H02M 1/12** (2006.01)  **H02M 1/42** (2007.01)
**F24F 11/89** (2018.01)

(21) Application number: **16890451.4**

(22) Date of filing: **15.02.2016**

(52) Cooperative Patent Classification (CPC):
**F24F 11/89; H02M 1/12; H02M 1/4216;**
**H02M 1/4225;** H02M 1/0025; H02M 1/0095;
H02M 1/4291; Y02B 70/10

(86) International application number:
**PCT/JP2016/054265**

(87) International publication number:
**WO 2017/141308 (24.08.2017 Gazette 2017/34)**

(54) **POWER CONVERSION DEVICE AND AIR CONDITIONING DEVICE USING SAME**

ENERGIEUMWANDLUNGSVORRICHTUNG UND KLIMAANLAGE DAMIT

DISPOSITIF DE CONVERSION DE PUISSANCE ET DISPOSITIF DE CLIMATISATION L'UTILISANT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**26.12.2018 Bulletin 2018/52**

(73) Proprietor: **Mitsubishi Electric Corporation**
**Chiyoda-ku**
**Tokyo 100-8310 (JP)**

(72) Inventors:
• **YUASA, Kenta**
 **Tokyo 100-8310 (JP)**
• **TSUMURA, Akihiro**
 **Tokyo 100-8310 (JP)**
• **KUSUBE, Shinsaku**
 **Tokyo 100-8310 (JP)**

(74) Representative: **Pfenning, Meinig & Partner mbB**
**Patent- und Rechtsanwälte**
**Theresienhöhe 11a**
**80339 München (DE)**

(56) References cited:
EP-A1- 3 358 732   WO-A1-2015/045425
JP-A- 2010 273 490   JP-A- 2013 162 529
JP-A- 2014 155 237   JP-A- 2014 236 001
JP-B2- 2 869 498   US-A1- 2003 075 997
US-A1- 2003 141 857   US-A1- 2007 103 947
US-A1- 2014 167 508

**Description**

Technical Field

The present invention relates to a power conversion device configured to rectify a three-phase AC voltage to transform the rectified voltage, and to an air-conditioning apparatus using the power conversion device.

Background Art

For a large-capacity inverter device configured to drive a motor for a compressor or a fan of a refrigeration and air-conditioning apparatus, there has hitherto been used a method of generating a DC voltage for driving the inverter by a three-phase full-wave rectification type converter. The three-phase full-wave rectification type converter includes a three-phase rectifier configured to rectify a three-phase AC voltage, a reactor, a capacitor, a smoothing capacitor configured to smooth an output voltage from the three-phase rectifier, and an inverter circuit configured to convert the voltage of the smoothing capacitor into an AC voltage.
For the three-phase full-wave rectification type converter described above, a power supply power factor and generation of harmonics for a power supply current are demanded to be improved. In response to this demand, there has been proposed a method of improving the power supply power factor and the power supply current harmonics (see, for example, Patent Literature 1).
A three-phase full-wave rectification type converter described in Patent Literature 1 includes a step-up converter configured to step up the output voltage from the three-phase rectifier by chopping and a switching control unit configured to control a switching element of the step-up converter. The switching control unit controls an on duty of the switching element so that a power supply current has a square wave.
With the method described in Patent Literature 1, the power supply current has a square wave, and hence as compared to a case in which a direct current (DC) reactor is provided immediately after the three-phase rectifier, power supply current harmonic components, in particular, a fifth-order harmonic component are reduced. Thus, this technology has an advantage in terms of harmonic regulation. Patent Literature 2 describes a boost chopper circuit which converts AC power to DC voltage and supplies the DC voltage to a load. Patent Literature 3 deals with a power conversion device with a converter control unit which is capable of calculating a current deviation.

Citation List

Patent Literature

Patent Literature 1: Japanese Patent No. 2869498
Patent Literature 2: US 2007/0103947 A1
Patent Literature 3: EP 3 358 732 A1

Summary of Invention

Technical Problem

According to the method described in Patent Literature 1, a deviation between a DC current command for causing DC power to flow through output of the three-phase rectifier and an output current of the three-phase rectifier detected by a DC current detector is suppressed to zero so that the power supply current has the square wave.
There is provided an advantage in that the fifth-order harmonic can be suppressed to reduce low-order harmonic components by causing the power supply current to have the square wave. However, high-order harmonic components are increased. Therefore, there is a problem in that a total harmonic distortion (THD) and a partial weighted harmonic distortion (PWHD), which are evaluated with a total amount of the harmonic components, deteriorate.
The present invention has been made in view of the problem of the related art described above, and has an object to provide a power conversion device capable of suppressing high-order harmonics while suppressing low-order harmonics and an air-conditioning apparatus using the power conversion device.

Solution to Problem

According to one embodiment of the present invention, there is provided a power conversion device including:

a rectifier, which is configured to rectify an AC voltage supplied from a three-phase AC power supply; a transformation circuit, which includes at least a reactor, a switching element, and a backflow prevention element, and is configured to transform the voltage rectified in the rectifier; a smoothing capacitor, which is configured to smooth an output voltage from the transformation circuit; an inverter, which is configured to convert a DC voltage smoothed in the smoothing capacitor into an AC voltage; a power supply voltage detector, which is configured to detect, as a power supply voltage, at least any one of at least one line voltage and at least one phase voltage of the three-phase AC power supply; an output voltage detector, which is configured to detect the output voltage from the transformation circuit; a current detector, which is configured to detect a reactor current flowing through the reactor; and a converter control unit, which is configured to control an operation of the switching element so as to bring a current deviation of the reactor current from a preset current value close to a preset current deviation based on the power supply voltage, the output voltage, and the reactor current. The converter control unit includes: a current control unit, which is configured to calculate a current command value indicative of a target current value of the reactor current based on a voltage difference obtained by subtracting the output voltage from a voltage command value indicative of a target voltage value for the output voltage; a switching command value control unit, which is configured to calculate a switching command value indicative of information relating to the operation of the switching element based on the current deviation obtained by subtracting the reactor current from the current command value; an error accumulation unit, which is configured to generate a control amount for correcting the switching command value based on the power supply voltage and the current deviation; and a switching control unit, which is configured to generate a switching signal controlling the operation of the switching element based on an added switching command value obtained by adding the switching command value and the control amount. The error accumulation unit includes: a current deviation accumulation amount determination unit, which is configured to determine an error amount indicative of an error in the reactor current based on the current deviation by comparing the current deviation and a preset threshold value with each other, and being configured to output a value of zero as the error amount when the current deviation is equal to or smaller than the preset threshold value, and to output the current deviation as the error amount when the current deviation is larger than the preset threshold value; a current deviation accumulation unit, which includes a plurality of integrators, each being configured to accumulate the error amount for each power supply phase angle of the three-phase AC power supply to generate the control amount, wherein a number of integrators of the plurality of integrators is identical to a number of ranges into which one period of the AC voltage is divided in accordance with respective power supply phase angles; a power supply phase angle calculation unit, which is configured to calculate a power supply phase angle of the power supply voltage detected by the power supply voltage detector based on the detected power supply voltage; an input selection unit, which is configured to cause an integrator corresponding to the calculated power supply phase angle among the plurality of integrators included in the current deviation accumulation unit to accumulate the error amount, based on the calculated power supply phase angle; and an output selection unit, which is configured to cause an integrator corresponding to the calculated power supply phase angle among the plurality of integrators included in the current deviation accumulation unit to output the control amount, based on the calculated power supply phase angle.

Advantageous Effects of Invention

As described above, according to one embodiment of the present invention, by bringing the current deviation of the reactor current from the predetermined current value close to a target current deviation, the high-order harmonics can be suppressed while the low-order harmonics are suppressed.

Brief Description of Drawings

[Fig. 1] Fig. 1 is a circuit diagram for illustrating an example of a configuration of a power conversion device according to Embodiment 1 of the present invention.
[Fig. 2] Fig. 2 is a circuit diagram for illustrating an example of a configuration of a converter control unit included in the power conversion device illustrated in Fig. 1.
[Fig. 3] Fig. 3 is a flowchart for illustrating a flow of processing of determining an error amount, which is performed in a current deviation accumulation amount determination unit illustrated in Fig. 2.
[Fig. 4] Fig. 4 is a block diagram for illustrating an example of an air-conditioning apparatus to which the power conversion device illustrated in Fig. 1 is applicable.
[Fig. 5] Fig. 5 is a circuit diagram for illustrating an example of a configuration of a power conversion device according to Embodiment 2 of the present invention.
[Fig. 6] Fig. 6 is a circuit diagram for illustrating an example of a configuration of a converter control unit included in the power conversion device illustrated in Fig. 5.

[Fig. 7] Fig. 7 is a circuit diagram for illustrating an example of a configuration of a power conversion device according to Embodiment 3 of the present invention.

Description of Embodiments

Embodiment 1

A power conversion device according to Embodiment 1 of the present invention is now described.

The power conversion device is configured to generate an AC current having a predetermined frequency from a three-phase AC power supply to supply the AC current to, for example, a load such as a motor for a compressor or an air-sending device in an air-conditioning apparatus.

[Configuration of Power Conversion Device]

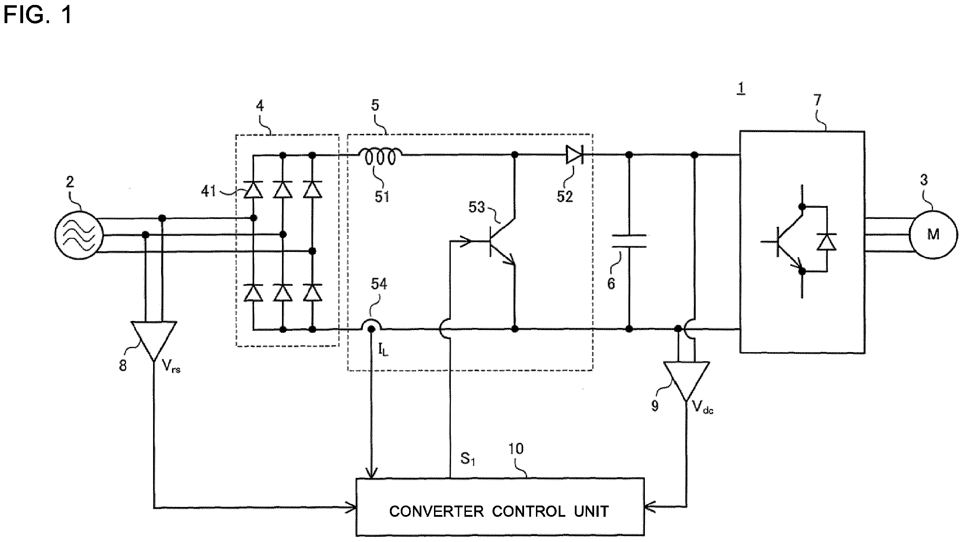

Fig. 1 is a circuit diagram for illustrating an example of a configuration of a power conversion device 1 according to Embodiment 1 of the present invention.

As illustrated in Fig. 1, a three-phase AC power supply 2 and a load 3 are connected to the power conversion device 1. The power conversion device 1 includes a rectifier 4, a transformation circuit 5, a smoothing capacitor 6, an inverter 7, a power supply voltage detector 8, an output voltage detector 9, and a converter control unit 10.

The rectifier 4 is an AC-DC converter, which is connected to the three-phase AC power supply 2, and is configured to rectify an AC voltage, for example, alternating current (AC) 200 V, supplied from the three-phase AC power supply 2 into a DC voltage. The rectifier 4 is made up of, for example, a three-phase full-wave rectifier including six bridge-connected diodes 41. The rectifier 4 outputs a rectified voltage Vin to the transformation circuit 5.

The transformation circuit 5 is a DC-DC converter configured to transform the voltage Vin rectified in the rectifier 4 to, for example, DC 365 V, and is made up of, for example, a step-up chopper circuit. The transformation circuit 5 outputs an output voltage $V_{dc}$ obtained by transforming the voltage Vin. The transformation circuit 5 includes a step-up reactor 51, a first backflow prevention element 52, and a first switching element 53.

The reactor 51 is connected to an output terminal of the rectifier 4. The first backflow prevention element 52 is connected to the reactor 51 in series. The first switching element 53 is connected between the reactor 51 and the first backflow prevention element 52.

The first backflow prevention element 52 is made up of a backflow prevention diode, for example, a fast recovery diode. Further, the first backflow prevention element 52 is made up of a wide bandgap semiconductor having a larger bandgap than that of a silicon (Si) element, for example, a silicon carbide (SiC) element, a gallium nitride (GaN) element, or a diamond element.

The first switching element 53 performs a turn-on or turn-off switching operation based on a switching signal $S_1$ supplied from the converter control unit 10 described later. The first switching element 53 is made up of, for example, a semiconductor element such as a metal-oxide-semiconductor field-effect transistor (MOSFET) or an insulated gate bipolar transistor (IGBT), or a wide bandgap semiconductor having a larger bandgap than that of a Si element, for example, a SiC element, a GaN element, or a diamond element.

Further, the transformation circuit 5 includes a current detector 54. The current detector 54 detects a reactor current $I_L$ flowing through the reactor 51. The detected reactor current $I_L$ is supplied to the converter control unit 10.

The smoothing capacitor 6 smooths and charges the output voltage $V_{dc}$ from the transformation circuit 5.

The inverter 7 includes, for example, a plurality of switching elements and converts the DC voltage smoothed and charged by the smoothing capacitor 6 into an AC voltage. The inverter 7 is connected to the load 3, for example, a motor for a compressor included in an air-conditioning apparatus and supplies the AC voltage having a predetermined frequency to the load 3. The inverter 7 is controlled by an inverter control unit (not shown).

As the switching elements used for the inverter 7, for example, semiconductor elements such as IGBTs or wide bandgap semiconductors such as silicon carbide (SiC) may be used as in the case of the first switching element 53 described above.

The power supply voltage detector 8 detects at least one line voltage or phase voltage of the three-phase AC power supply 2. In this case, as an example, a line voltage between an R phase and an S phase of three phases is detected as a power supply voltage $V_{rs}$. The detected power supply voltage $V_{rs}$ is supplied to the converter control unit 10.

The output voltage detector 9 detects the output voltage $V_{dc}$ accumulated in the smoothing capacitor 6. The detected output voltage $V_{dc}$ is supplied to the converter control unit 10.

The converter control unit 10 generates a switching signal $S_1$ based on the power supply voltage $V_{rs}$ detected by the power supply voltage detector 8, the output voltage $V_{dc}$ detected in the output voltage detector 9, and the reactor current $I_L$ detected in the current detector 54.

The converter control unit 10 is constructed by a program to be executed in an arithmetic unit, for example, a microcomputer or a central processing unit (CPU).

(Configuration of Converter Control Unit)

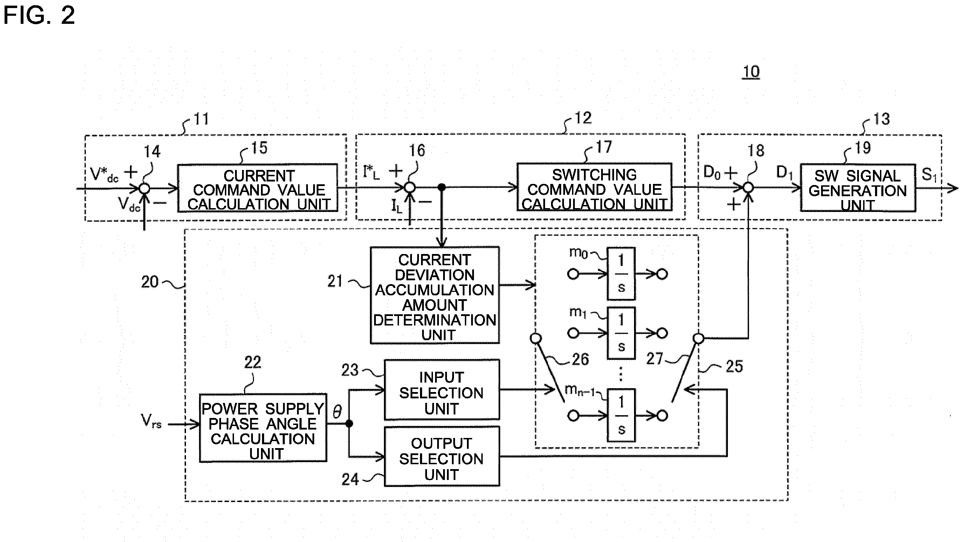

Fig. 2 is a circuit diagram for illustrating an example of a configuration of the converter control unit 10 included in the power conversion device 1 illustrated in Fig. 1.

As illustrated in Fig. 2, the converter control unit 10 includes a current control unit 11, a switching command value control unit 12, a switching control unit 13, and an error accumulation unit 20.

The current control unit 11 calculates a current command value $I_L^*$, which is a target current value of the reactor current $I_L$ flowing through the reactor 51 based on a voltage command value $V_{dc}^*$, which is a target voltage value of the output voltage $V_{dc}$, and the output voltage $V_{dc}$ detected in the output voltage detector 9. The current control unit 11 includes a voltage subtractor 14 and a current command value calculation unit 15.

The voltage subtractor 14 subtracts the output voltage $V_{dc}$ detected in the output voltage detector 9 from the voltage command value $V_{dc}^*$ to calculate a voltage difference.

The current command value calculation unit 15 calculates the current command value $I_L^*$ based on the voltage difference calculated in the voltage subtractor 14. The current command value calculation unit 15 performs, for example, proportional-integral-derivative (PID) control being a combination of proportional control (P), integral control (I), and derivative control (D) to calculate the current command value $I_L^*$.

The current command value calculation unit 15 may use any control method without being limited to the PID control as long as the current command value $I_L^*$ is calculated. For example, P control only with the proportional control may be used, or control being a combination of any of the proportional control, the integral control, and the derivative control may be used.

The switching command value control unit 12 calculates a switching command value Do based on the current command value $I_L^*$ calculated in the current control unit 11 and the reactor current $I_L$ detected in the current detector 54. The switching command value control unit 12 includes a current subtractor 16 and a switching command value calculation unit 17.

The current subtractor 16 subtracts the reactor current $I_L$ from the current command value $I_L^*$ to calculate a current deviation $I_L^*-I_L$.

The switching command value calculation unit 17 calculates the switching command value Do based on the current deviation $I_L^*-I_L$, which is calculated in the current subtractor 16. The switching command value Do is a value indicative of information relating to the switching operation of the first switching element 53, and is, for example, a value indicative of a duty ratio of the switching signal S1. The switching command value calculation unit 17 performs, for example, the PID control being the combination of the proportional control, the integral control, and the derivative control to calculate the switching command value Do.

A control method used in the switching command value calculation unit 17 is not limited to that described above. For example, a control method such as PI control being a combination of the proportional control and the integral control or the P control only with the proportional control may be used, or control being a combination of any of the proportional control, the integral control, and the derivation control may be used.

The switching control unit 13 generates the switching signal $S_1$ based on the switching command value Do calculated in the switching command value control unit 12 and a control amount output from the error accumulation unit 20 described later. The switching control unit 13 includes an adder 18 and a switching signal generation unit 19.

The adder 18 adds the switching command value Do calculated in the switching command value calculation unit 17 and the control amount for correcting the switching command value Do, which is output from the error accumulation unit 20, to calculate an added switching command value $D_1$. At this time, the adder 18 may add a value obtained by multiplying the control amount by a predetermined constant to the switching command value Do.

The switching signal generation unit 19 generates and outputs the switching signal $S_1$ indicative of the turn-on or turn-off switching operation of the first switching element 53 based on the added switching command value $D_1$ calculated in the adder 18.

The switching signal generation unit 19 generates the switching signal S1 with use of a commonly known method, for example, a method using a triangle wave having a carrier frequency.

The error accumulation unit 20 calculates the control amount based on the current deviation $I_L^*-I_L$ calculated in the current subtractor 16 and the power supply voltage $V_{rs}$ detected by the power supply voltage detector 8.

The error accumulation unit 20 includes a current deviation accumulation amount determination unit 21, a power supply phase angle calculation unit 22, an input selection unit 23, an output selection unit 24, a current deviation accumulation unit 25, an input switch 26, and an output switch 27.

The current deviation $I_L^*-I_L$ calculated in the current subtractor 16 is input to the current deviation accumulation amount determination unit 21, which then determines an error amount indicative of an error in the reactor current $I_L$ to be accumulated in the current deviation accumulation unit 25 described later based on the current deviation $I_L^*-I_L$.

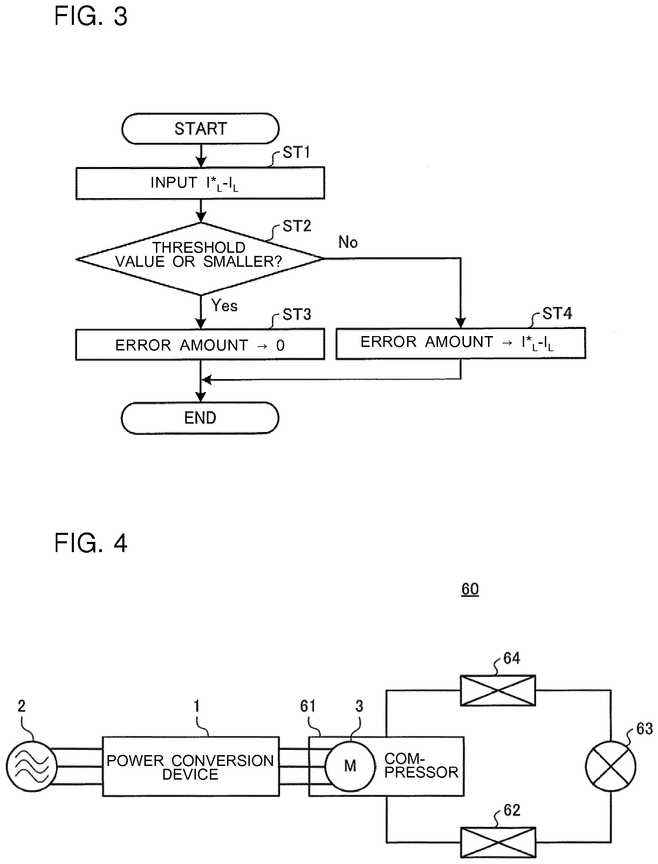

Fig. 3 is a flowchart for illustrating a flow of processing of determining the error amount, which is performed by the current deviation accumulation amount determination unit 21 illustrated in Fig. 2.

When the current deviation $I_L^*-I_L$ calculated in the current subtractor 16 is input (Step ST1), the current deviation accumulation amount determination unit 21 compares the current deviation $I_L^*-I_L$ and a preset threshold value with each other (Step ST2). Then, when the current deviation $I_L^*-I_L$ is equal to or smaller than the threshold value (Step ST2: Yes), a value "0" is output as the error amount (Step ST3). Meanwhile when the current deviation $I_L^*-I_L$ is larger than the threshold value (Step ST2: No), the current deviation $I_L^*-I_L$ is output as the error amount (Step ST4).

The threshold value for determining the error amount to be accumulated in the current deviation accumulation unit 25 may be set by, for example, feedback control, which is performed so that a harmonic component of a specific order of harmonics of the power supply current becomes equal to or smaller than a predetermined value. Further, for example, a harmonic component of an order desired to be reduced is calculated each time and the threshold value may be set variable so that the harmonic has a predetermined value or smaller, or a predetermined threshold value may be used.

Returning back to Fig. 2, the error amount output from the current deviation accumulation amount determination unit 21 is input to the current deviation accumulation unit 25, which then accumulates the error amount for each power phase angle of the power supply voltage $V_{rs}$ so as to generate the control amount.

The current deviation accumulation unit 25 includes a plurality of integrators m, in which N integrators mo to $m_{n-1}$ are provided for the respective different power supply phase angles. Specifically, the error amounts are accumulated in the respective N integrators mo to $m_{n-1}$ for the respective power supply phase angles obtained when one period of the AC voltage is divided into N ranges.

It is preferred that the number N of the integrators mo to $m_{n-1}$ be set based on a period of the power supply voltage, which is a power supply frequency, and a control period, which is a control frequency. For example, when a power supply frequency of the three-phase AC power supply 2 is 60 Hz and the control frequency is 18 kHz (=18,000 Hz), the number N of the integrators mo to $m_{n-1}$ is set to "18,000/60 Hz=300."

Then, one integrator m corresponds to a phase angle having a value obtained by dividing a full power supply phase angle by the number of integrators m. Therefore, one integrator m in this case accumulates the error amount for a power supply phase angle of "1.2 degrees (=360 degrees÷300)".

The current deviation accumulation unit 25 includes the input switch 26 and the output switch 27. The input switch 26 operates based on information from the input selection unit 23 described later. In this manner, the integrator m to accumulate the input error amount therein is determined. Further, the input switch 27 operates based on information from the output selection unit 24 described later. In this manner, the integrator m to output the control amount based on the accumulated error amount is determined.

The power supply phase angle calculation unit 22 calculates a power supply phase angle θ of the power supply voltage $V_{rs}$ based on the line voltage or the phase voltage detected by the power supply voltage detector 8. As described above, the power supply voltage detector 8 detects at least one line voltage or phase voltage of the three-phase AC power supply 2, and hence the power supply phase angle calculation unit 22 calculates the power supply phase angle θ of one of the three phases. In this example, the power supply voltage $V_{rs}$ is detected by the power supply voltage detector 8. Therefore, the power supply phase angle θ is calculated based on the power supply voltage $V_{rs}$.

Further, the power supply phase angle calculation unit 22 has a function of detecting zero crossing of the power supply voltage $V_{rs}$ to detect the period of the power supply voltage $V_{rs}$. In this case, a harmonic component of the reactor current $I_L$ has the same frequency characteristic as that of the period of the power supply voltage $V_{rs}$. The phase angle calculation unit 22 detects the zero crossing of the power supply voltage $V_{rs}$, and hence the periodicity of the reactor current $I_L$ can be known with a simple method. Thus, the circuit can be formed at low cost.

The input selection unit 23 outputs information for operating the input switch 26 included in the current deviation accumulation unit 25 based on the power supply phase angle θ of the power supply voltage $V_{rs}$, which is calculated in the power supply phase angle calculation unit 22. Specifically, the input selection unit 23 operates the input switch 26 so that the error amount is accumulated in the integrator m corresponding to the power supply phase angle θ among the N integrators mo to $m_{n-1}$ included in the current deviation accumulation unit 25.

The output selection unit 24 outputs information for operating the output switch 27 based on the power supply phase angle θ calculated in the power supply phase angle calculation unit 22. Specifically, the output selection unit 24 operates the output switch 27 so that the control amount is output from the integrator m corresponding to the power supply phase angle that is delayed by a preset set delay phase from the power supply phase angle θ among the N integrators mo to $m_{n-1}$ included in the current deviation accumulation unit 25.

In this case, as described above, the harmonic component of the reactor current $I_L$ has the same frequency characteristic as that of the period of the power supply voltage $V_{rs}$. Therefore, it is preferred that the set delay phase amount be set to one power supply period. In this manner, an error in the reactor current $I_L$ can be canceled out with use of the control amount having the same frequency characteristic, and hence fluctuations in reactor current $I_L$ can be reliably suppressed.

Further, the input selection unit 23 and the output selection unit 24 control timing to accumulate the error amount in the integrators m and timing to cause the control amount to be output from the integrators m in consideration of two types of delay, that is, delay due to waste time and delay due to current control.

The delay due to waste time is caused by a calculation time delay of a controller, for example, a microcomputer. The delay generated in this case generally corresponds to one control period.

The delay due to current control is caused by the reactor current $I_L$. A relationship between the reactor current Land a reactor voltage $V_L$, which is the voltage across the reactor 51, can be expressed by Expression (1) when an inductance of the reactor 51 is represented by L.

$$I_L = \frac{1}{L} \int V_L \, dt \qquad \cdots \quad (1)$$

As expressed by Expression (1), the reactor current $I_L$ is represented by an integral of the reactor voltage $V_L$. Specifically, it means that, even when the transformation circuit 5 performs output so that the reactor voltage $V_L$ is obtained as the output voltage, a certain time is required until the output is reflected as the reactor current $I_L$. Therefore, when the control amount is output from the integrators m of the current deviation accumulation unit 25 in consideration of the delay due to the current control, the delay for one control period is required to be taken into consideration.

As described above, the above-mentioned two types of delay are taken into consideration. As a result, the timing for the output selection unit 24 to output the control amount from the integrators m is set to be advanced by two control periods as compared to the timing for the input selection unit 23 to accumulate the error amount in the integrators m.

[Operation of Power Conversion Device]

Next, an operation of the power conversion device 1 according to Embodiment 1 is described.

As illustrated in Fig. 1, when the AC voltage is supplied from the three-phase AC power supply 2, the AC voltage is supplied to the rectifier 4. The rectifier 4 rectifies the supplied AC voltage to output the voltage Vin. The voltage Vin output from the rectifier 4 is supplied to the transformation circuit 5. The transformation circuit 5 steps up the voltage Vin to output the output voltage $V_{dc}$. At this time, the operation of the transformation circuit 5 is controlled by the converter control unit 10 so that the reactor current $I_L$ becomes constant.

When the first switching element 53 is turned on in the transformation circuit 5, the voltage $V_{in}$ rectified by the rectifier 4 is applied to the reactor 51, and the conduction of a current is inhibited by the first backflow prevention element 52.

Meanwhile, when the first switching element 53 is turned off, the current is conducted through the first backflow prevention element 22, and a voltage in a direction opposite to that at the time when the first switching element 53 is turned on is induced to the reactor 51. At this time, energy accumulated in the reactor 51 while the first switching element 53 is on is transferred to the smoothing capacitor 6 side.

In this case, an on duty of the first switching element 53 is controlled by the converter control unit 10 to control the output voltage $V_{dc}$ from the transformation circuit 5.

The output voltage $V_{dc}$ stepped up by the transformation circuit 5 is accumulated in the smoothing capacitor 6. Then, the smoothing capacitor 6 smooths the output voltage $V_{dc}$.

The output voltage Vdc smoothed by the smoothing capacitor 6 is converted into the three-phase AC voltage by the inverter 7. Then, the converted AC voltage is supplied to the load 3.

The operation of the first switching element 53 included in the transformation circuit 5 is controlled by the converter control unit 10. The converter control unit 10 generates the switching signal S1 based on the results of detection by the power supply voltage detector 8, the output voltage detector 9, and the current detector 54, and supplies the first switching signal to the first switching element 53.

As illustrated in Fig. 2, in the converter control unit 10, first, the voltage subtractor 14 subtracts the output voltage $V_{dc}$ at current time detected in the output voltage detector 9 from the voltage command value $V_{dc}*$ to calculate the voltage difference. The current command value calculation unit 15 calculates the current command value $I_L*$ based on the voltage difference calculated in the voltage subtractor 14.

Next, the current subtractor 16 subtracts the reactor current $I_L$ from the current command value $I_L*$ calculated in the current command value calculation unit 15 to calculate the current deviation $I_L*-I_L$. The switching command value calculation unit 17 calculates the switching command value Do based on the current deviation $I_L*-I_L$ calculated in the current subtractor 16.

Meanwhile, the power supply phase angle calculation unit 22 calculates the power supply phase angle $\theta$ of the power supply voltage $V_{rs}$ based on the power supply voltage $V_{rs}$ detected in the power supply detector 8.

Further, the current deviation accumulation amount determination unit 21 determines the error amount based on the current deviation $I_L^*-I_L$ calculated in the current subtractor 16.

Further, the input selection unit 23 operates the input switch 26 based on the power supply phase angle $\theta$ of the power supply voltage $V_{rs}$ calculated in the power supply phase angle calculation unit 22 to select the integrator m corresponding to the power supply phase angle $\theta$. The output selection unit 24 operates the output switch 27 based on the power supply phase angle $\theta$ of the power supply voltage $V_{rs}$ to select the integrator m corresponding to the power supply phase angle that is delayed from the power supply phase angle $\theta$ by the set delay phase for one power supply period or other periods and is advanced from the power supply phase angle corresponding to the integrator selected by the input selection unit 23 by two control periods.

Then, the current deviation accumulation unit 25 accumulates the error amount determined in the current deviation accumulation amount determination unit 21 in the integrators m selected by the input selection unit 23 and outputs the control amount from the integrators m selected by the output selection unit 24.

Next, the adder 18 adds the switching command value Do calculated in the switching command value calculation unit 17 and the control amount output from the current deviation accumulation unit 25 to calculate the added switching command value $D_1$.

The switching signal generation unit 19 generates the switching signal $S_1$ based on the added switching command value $D_1$ calculated in the adder 18 and outputs the switching signal $S_1$ to the first switching element 53.

[Example of Circuit with Application of Power Conversion Device]

Next, a circuit to which the power conversion device 1 is applicable is described.

Fig. 4 is a block diagram for illustrating an example of an air-conditioning apparatus 60 to which the power conversion device 1 illustrated in Fig. 1 is applicable.

As illustrated in Fig. 4, the air-conditioning apparatus 60 includes a compressor 61 driven by a motor as serving the load 3 supplied with power by the power conversion device 1 to compress refrigerant, a heat source-side heat exchanger 62 serving as a condenser configured to exchange heat between the refrigerant and an outside fluid, an expansion valve 63 configured to decompress and expand the refrigerant, and a use-side heat exchanger 64 serving as an evaporator configured to exchange heat between the refrigerant and the outside fluid. The compressor 61, the heat source-side heat exchanger 62, the expansion valve 63, and the use-side heat exchanger 64 are connected in the stated order by refrigerant pipes to form a refrigerant circuit through which the refrigerant circulates in the refrigerant pipes.

In the air-conditioning apparatus 60, first, low-temperature and low-pressure refrigerant is compressed by the compressor 61 into high-temperature and high-pressure gas refrigerant to be discharged from the compressor 61. The high-temperature and high-pressure gas refrigerant discharged from the compressor 61 flows into the heat source-side heat exchanger 62 functioning as the condenser to be condensed while rejecting heat through heat exchange with an outside fluid such as air or water to turn into high-pressure liquid refrigerant in a subcooled state, which then flows out of the heat source-side heat exchanger 62.

The high-pressure liquid refrigerant flowing out of the heat source-side heat exchanger 62 is expanded and decompressed by the expansion valve 63 into low-temperature and low-pressure two-phase gas-liquid refrigerant, which then flows into the use-side heat exchanger 64 functioning as the evaporator. The low-temperature and low-pressure two-phase gas-liquid refrigerant flowing into the use-side heat exchanger 64 exchanges heat with indoor air to remove heat and evaporate, thereby cooling the indoor air. The low-temperature and low-pressure two-phase gas-liquid refrigerant turns into low-temperature and low-pressure gas refrigerant to flow out of the use-side heat exchanger 64. The low-temperature and low-pressure gas refrigerant flowing out of the use-side heat exchanger 64 is sucked into the compressor 61.

Although the circuit for performing a cooling operation has been described in the above-mentioned example of the air-conditioning apparatus 60, a heating operation can be performed by, for example, interchanging a position at which the heat source-side heat exchanger 62 is connected and a position at which the use-side heat exchanger 64 is connected with each other.

As described above, in Embodiment 1, the control amount is output from the error accumulation unit 20. Based on the added switching command value $D_1$ obtained by correcting the switching command value Do with the control amount, the switching signal $S_1$ for controlling the operation of the first switching element 53 of the transformation circuit 5 is generated. In this manner, the current deviation of the reactor current $I_L$ from the predetermined current value can be brought close to a target current deviation by using the relationship between the period of the power supply voltage $V_{rs}$ and the period of the reactor current $I_L$. Therefore, performance of the current control can be improved. Thus, high-order harmonics can be suppressed while low-order harmonics are suppressed. Then, the THD and the PWHD, which are evaluated with a total amount of harmonic components, can be reduced.

Specifically, in comparison to the related-art power conversion device, which controls the current deviation of the reactor to be converged to 0 to cause the input current to have the square wave, not only the low-order harmonics but also the high-order harmonics can be suppressed in the power conversion device according to Embodiment 1.

Further, through use of the wide bandgap semiconductor as the switching element, the carrier frequency can be set high. Thus, a response of the current control can be further enhanced, and hence even higher-order harmonics can be controlled to be suppressed.

Embodiment 2

A power conversion device according to Embodiment 2 of the present invention is now described.

The power conversion device according to Embodiment 2 differs from Embodiment 1 in the configuration of the transformation circuit and the configuration of the converter control unit configured to control the transformation circuit.

[Configuration of Power Conversion Device]

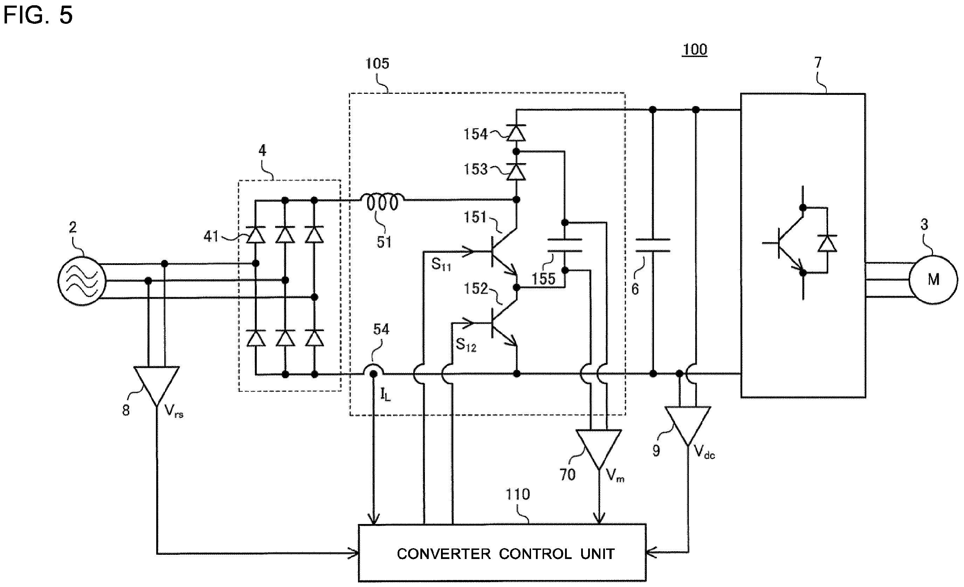

Fig. 5 is a circuit diagram for illustrating an example of a configuration of a power conversion device 100 according to Embodiment 2 of the present invention.

Portions similar to those of the power conversion device 1 according to Embodiment 1 are denoted by the same reference symbols, and detailed description thereof is herein omitted. Further, similarly to Embodiment 1, the power conversion device 100 is applicable to the air-conditioning apparatus 60 with use of the motor for the compressor 61 as the load 3.

As illustrated in Fig. 5, the three-phase AC power supply 2 and the load 3 are connected to the power conversion device 100. The power conversion device 100 includes the rectifier 4, a transformation circuit 105, the smoothing capacitor 6, the inverter 7, the power supply voltage detector 8, the output voltage detector 9, an intermediate voltage detector 70, and a converter control unit 110.

The transformation circuit 105 is a step-up chopper circuit configured to transform the voltage Vin rectified in the rectifier 4 to output the output voltage $V_{dc}$, similarly to the transformation circuit 5 illustrated in Fig. 1, and is also configured as a multilevel converter capable of outputting a plurality of levels of output voltages.

The transformation circuit 105 includes the reactor 51, a second switching element 151, a third switching element 152, a second backflow prevention element 153, a third backflow prevention element 154, an intermediate capacitor 155, and the current detector 54.

The reactor 51 is connected to an output end of the rectifier 4. The second backflow prevention element 153 and the third backflow prevention element 154 are connected to each other in series, and are connected to the reactor 51 in series.

The second switching element 151 and the third switching element 152 are connected between the reactor 51 and the second backflow prevention element 153.

The intermediate capacitor 155 is connected between the second switching element 151 and the third switching element 152 and between the second backflow prevention element 153 and the third backflow prevention element 154.

Each of the second backflow prevention element 153 and the third backflow prevention element 154 is made up of a backflow prevention diode, for example, a fast recovery diode, similarly to the first backflow prevention element 52 in Embodiment 1. Further, each of the second backflow prevention element 153 and the third backflow prevention element 154 is made up of, for example, a wide bandgap semiconductor having a larger bandgap than that of the Si element, similarly to the first backflow prevention element 52.

The second switching element 151 performs a turn-on or turn-off switching operation based on a switching signal $S_{11}$ supplied from the converter control unit 110 described later.

The third switching element 152 performs a turn-on or turn-off switching operation based on a switching signal $S_{12}$ supplied from the converter control unit 110.

Each of the second switching element 151 and the third switching element 152 is made up of, for example, a semiconductor element such as a MOSFET, or a wide bandgap semiconductor, similarly to the first switching element 53 in Embodiment 1.

The transformation circuit 105 can output three levels of voltage, that is, 0, $V_m$, and $V_{dc}$ as an output voltage in accordance with the operation of the second switching element 151 and the operation of the third switching element 152.

The second switching element 151 and the third switching element 152 perform the switching operations so that any one thereof is turned on and another is turned off, and hence the intermediate voltage $V_m$ is controlled to be 1/2 of the output voltage $V_{dc}$ of the smoothing capacitor 6. In this manner, a switching loss can be reduced, and hence a carrier ripple current of the reactor 51 can be reduced. Thus, efficiency can be improved.

The intermediate voltage detector 70 detects the intermediate voltage $V_m$ across the intermediate capacitor 155 included in the transformation circuit 105.

The converter control unit 110 generates the switching signals $S_{11}$ and $S_{12}$ based on the power supply voltage $V_{rs}$ detected by the power supply voltage detector 8, the output voltage $V_{dc}$ detected in the output voltage detector 9,

the intermediate voltage $V_m$ detected in the intermediate voltage detector 70, and the reactor current $I_L$ detected in the current detector 54. The generated switching signal $S_{11}$ is supplied to the second switching element 151, whereas the switching signal $S_{12}$ is supplied to the third switching element 152.

The converter control unit 110 is constructed by a program to be executed in an arithmetic unit, for example, a microcomputer, similarly to the converter control unit 10 in Embodiment 1.

(Configuration of Converter Control Unit)

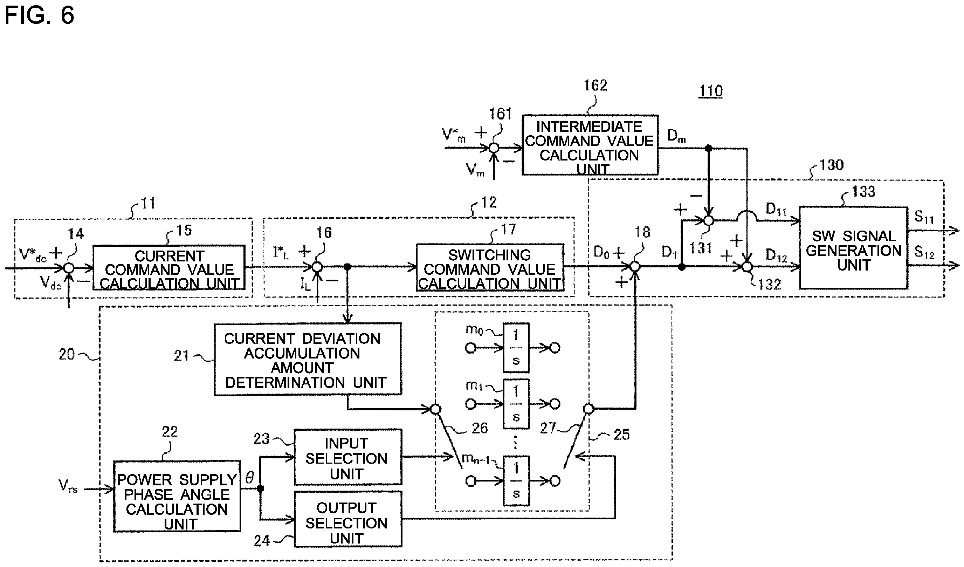

Fig. 6 is a circuit diagram for illustrating an example of a configuration of the converter control unit 110 included in the power conversion device 100 illustrated in Fig. 5.

As illustrated in Fig. 6, the converter control unit 110 includes the current control unit 11, the switching command value control unit 12, an intermediate voltage subtractor 161, an intermediate command value calculation unit 162, a switching control unit 130, and the error accumulation unit 20.

The intermediate voltage subtractor 161 subtracts the intermediate voltage $V_m$ detected in the intermediate voltage detector 70 from an intermediate voltage command value $V_m{}^*$ being a target voltage value of the intermediate voltage $V_m$ to calculate an intermediate voltage difference.

The intermediate command value calculation unit 162 calculates an intermediate switching command value $D_m$ based on the intermediate voltage difference calculated in the intermediate voltage subtractor 161. The intermediate command value calculation unit 162 calculates the intermediate switching command value $D_m$ by performing, for example, the PID control, the PI control, the P control, or other types of control.

The switching control unit 130 generates the switching signal $S_{11}$ and the switching signal $S_{12}$ based on the switching command value Do calculated in the switching command value control unit 12, the intermediate switching command value $D_m$ calculated in the intermediate command value calculation unit 162, and the control amount output from the error accumulation unit 20. The switching control unit 130 includes the adder 18, an intermediate subtractor 131, an intermediate adder 132, and a switching signal generation unit 133.

The intermediate subtractor 131 subtracts the intermediate switching command value $D_m$ calculated in the intermediate command value calculation unit 162 from the added switching command value $D_1$ calculated in the adder 18 to calculate a subtracted switching command value $D_{11}$.

The intermediate adder 132 adds the added switching command value $D_1$ calculated in the adder 18 and the intermediate switching command value $D_m$ calculated in the intermediate command value calculation unit 162 to calculate an added switching command value $D_{12}$.

The switching signal generation unit 133 generates and outputs the switching signal $S_{11}$ indicative of the turn-on or turn-off switching operation of the second switching element 151 based on the subtracted switching command value $D_{11}$ calculated in the intermediate subtractor 131.

Further, the switching signal generation unit 133 generates the switching signal $S_{12}$ indicative of the turn-on or turn-off switching operation of the third switching element 152 based on the added switching command value $D_{12}$ calculated in the intermediate adder 132.

As described above, in Embodiment 2, the multilevel converter is used as the transformation circuit. Even in this case, similarly to Embodiment 1, the current deviation of the reactor current $I_L$ from the predetermined current value can be brought close to the target current deviation with use of the relationship between the period of the power supply voltage $V_{rs}$ and the period of the reactor current $I_L$. Therefore, the performance of the current control can be improved, and hence the high-order harmonics can also be suppressed while the low-order harmonics are suppressed.

Embodiment 3

A power conversion device according to Embodiment 3 of the present invention is now described.

The power conversion device according to Embodiment 3 differs from those of Embodiment 1 and Embodiment 2 in the configuration of the transformation circuit.

[Configuration of Power Conversion Device]

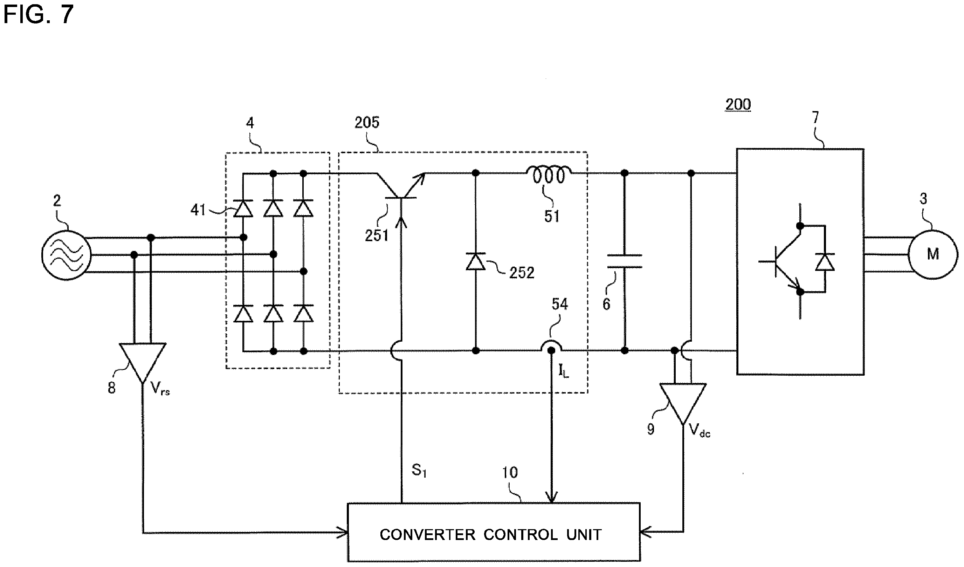

Fig. 7 is a circuit diagram for illustrating an example of a configuration of a power conversion device 200 according to Embodiment 3 of the present invention.

Portions similar to those of the power conversion device 1 according to Embodiment 1 and the power conversion device 100 according to Embodiment 2 are denoted by the same reference symbols, and detailed description thereof is herein omitted. Further, similarly to Embodiment 1 and Embodiment 2, the power conversion device 200 is applicable to the air-conditioning apparatus 60 with use of the motor for the compressor 61 as the load 3.

As illustrated in Fig. 7, the three-phase AC power supply 2 and the load 3 are connected to the power conversion device 200. The power conversion device 200 includes the rectifier 4, a transformation circuit 205, the smoothing capacitor 6, the inverter 7, the power supply voltage detector 8, the output voltage detector 9, and the converter control unit 10.

The transformation circuit 205 is configured as a step-down converter configured to transform the voltage Vin rectified in the rectifier 4 to output the output voltage $V_{dc}$, which is stepped down.

The transformation circuit 205 includes the reactor 51, a fourth switching element 251, a fourth backflow prevention element 252, and the current detector 54.

The fourth switching element 251 is connected to the output end of the rectifier 4. The reactor 51 is connected to the fourth switching element 251 in series. The fourth backflow prevention element 252 is connected between the fourth switching element 251 and the reactor 51.

The fourth switching element 251 performs a turn-on or turn-off switching operation based on the switching signal $S_1$ supplied from the converter control unit 10.

As described above, in Embodiment 3, the step-down converter is used as the transformation circuit. Even in this case, similarly to Embodiment 1 and Embodiment 2, the current deviation of the reactor current $I_L$ from the predetermined current value can be brought close to the target current deviation with use of the relationship between the period of the power supply voltage $V_{rs}$ and the period of the reactor current $I_L$. Therefore, the performance of the current control can be improved, and hence the high-order harmonics can also be suppressed while the low-order harmonics are suppressed.

Reference Signs List

1, 100, 200 power conversion device 2 three-phase AC power supply
3 load 4 rectifier 5, 105, 205 transformation circuit 6 smoothing capacitor 7 inverter 8 power supply voltage detector 9 output voltage detector 10, 110 converter control unit 11 current control unit 12 switching command value control unit 13, 130 switching control unit 14 voltage subtractor
15 current command value calculation unit 16 current subtractor 17 switching command value calculation unit 18 adder 19, 133 switching signal generation unit 20 error accumulation unit 21 current deviation accumulation amount determination unit 22 power supply phase angle calculation unit 23 input selection unit 24 output selection unit 25 current deviation accumulation unit
26 input switch 27 output switch 41 diode 51 reactor 52 first backflow prevention element 53 first switching element 54 current detector
60 air-conditioning apparatus 61 compressor 62 heat source-side heat exchanger 63 expansion valve 64 use-side heat exchanger 70 intermediate voltage detector 131 intermediate subtractor 132 intermediate adder 151 second switching element 152 third switching element 153 second backflow prevention element 154 third backflow prevention element 155 intermediate capacitor 161 intermediate voltage subtractor 162 intermediate command value calculation unit 251 fourth switching element 252 fourth backflow prevention element

**Claims**

1. A power conversion device (1, 100, 200), comprising:

   a rectifier (4), which is configured to rectify an AC voltage supplied from a three-phase AC power supply (2);
   a transformation circuit (5, 105, 205), which includes at least a reactor (51), a switching element (53, 151, 152, 251), and a backflow prevention element (52, 153, 154, 252), and is configured to transform the voltage rectified in the rectifier (4);
   a smoothing capacitor (6), which is configured to smooth an output voltage from the transformation circuit (5, 105, 205);
   an inverter (7), which is configured to convert a DC voltage smoothed in the smoothing capacitor (6) into an AC voltage;
   a power supply voltage detector (8), which is configured to detect, as a power supply voltage, at least any one of at least one line voltage and at least one phase voltage of the three-phase AC power supply (2);
   an output voltage detector (9), which is configured to detect the output voltage from the transformation circuit (5, 105, 205);
   a current detector (54), which is configured to detect a reactor current flowing through the reactor (51); and
   a converter control unit (10, 110), which is configured to control an operation of the switching element (53, 151, 152, 251) so as to bring a current deviation of the reactor current from a preset current value close to a preset current deviation based on the power supply voltage, the output voltage, and the reactor current, wherein the converter control unit (10, 110) includes:

> a current control unit (11), which is configured to calculate a current command value indicative of a target current value of the reactor current based on a voltage difference obtained by subtracting the output voltage from a voltage command value indicative of a target voltage value for the output voltage;
> a switching command value control unit (12), which is configured to calculate a switching command value indicative of information relating to the operation of the switching element (53, 251, 152, 251) based on the current deviation obtained by subtracting the reactor current from the current command value;
> an error accumulation unit (20), which is configured to generate a control amount for correcting the switching command value based on the power supply voltage and the current deviation; and
> a switching control unit (13, 130), which is configured to generate a switching signal controlling the operation of the switching element (53, 151, 152, 251) based on an added switching command value obtained by adding the switching command value and the control amount, and

wherein the error accumulation unit (20) includes:

> a current deviation accumulation amount determination unit (21), which is configured to determine an error amount indicative of an error in the reactor current based on the current deviation by comparing the current deviation and a preset threshold value with each other, and being configured to output a value of zero as the error amount when the current deviation is equal to or smaller than the preset threshold value, and to output the current deviation as the error amount when the current deviation is larger than the preset threshold value;
> a current deviation accumulation unit (25), which includes a plurality of integrators, each being configured to accumulate the error amount for each power supply phase angle of the three-phase AC power supply (2) to generate the control amount, wherein a number of integrators of the plurality of integrators is identical to a number of ranges into which one period of the AC voltage is divided in accordance with respective power supply phase angles;
> a power supply phase angle calculation unit (22), which is configured to calculate a power supply phase angle of the power supply voltage detected by the power supply voltage detector (8) based on the detected power supply voltage;
> an input selection unit (23), which is configured to cause an integrator corresponding to the calculated power supply phase angle among the plurality of integrators included in the current deviation accumulation unit (25) to accumulate the error amount, based on the calculated power supply phase angle; and
> an output selection unit (24), which is configured to cause an integrator corresponding to the calculated power supply phase angle among the plurality of integrators included in the current deviation accumulation unit (25) to output the control amount, based on the calculated power supply phase angle.

2. The power conversion device (1, 100, 200) of claim 1, wherein the output selection unit (24) is configured to cause an integrator corresponding to a phase angle delayed from the calculated power supply phase angle by one power supply period to output the control amount.

3. The power conversion device (1, 100, 200) of claim 1 or 2, wherein the output selection unit (24) is configured to cause an integrator corresponding to a phase angle advanced from the power supply phase angle corresponding to the integrator selected by the input selection unit (23) by two control periods, to output the control amount.

4. The power conversion device (1, 100, 200) of claim 1, wherein the current deviation accumulation amount determination unit (21) is configured to set the preset threshold value so that a harmonic component of a predetermined order in a power supply current from the three-phase AC power supply (2) has a value equal to or smaller than a preset value.

5. The power conversion device (1, 100, 200) of any one of claims 1 to 4, wherein a number of the plurality of integrators provided to the current deviation accumulation unit (25) is determined based on a period of the power supply voltage and a control period.

6. The power conversion device (1, 100, 200) of any one of claims 1 to 5, wherein the current control unit (11) is configured to perform one of, or a combination of two or more of, proportional control, integral control, and derivative control on the voltage difference to calculate the current command value.

7. The power conversion device (1) of any one of claims 1 to 6, wherein the switching command value control unit (12) is configured to perform one of, or a combination of two or more of, proportional control, integral control, and derivative control on the current deviation to calculate the switching command value.

8. The power conversion device (100) of any one of claims 1 to 7, wherein in the transformation circuit (5):

   the reactor (51) is connected to an output end of the rectifier (4) the backflow prevention element (52) is connected to the reactor (51) in series and
   the switching element (53) is connected between the reactor (51) and the backflow prevention element (52).

9. The power conversion device (100) of any one of claims 1 to 7, wherein in the transformation circuit (105):

   the reactor (51) is connected to an output end of the rectifier (4);
   the backflow prevention element comprises a second backflow prevention element (153) and a third backflow prevention element (154), which are connected to each other in series and are connected to the reactor (51) in series;
   the switching element comprises a second switching element (151) and a third switching element (152), which are connected to each other in series and are connected between the reactor (51) and the second backflow prevention element (153); and
   an intermediate capacitor is comprised and is connected between the second backflow prevention element (153) and the third backflow prevention element (154) and between the second switching element (151) and the third switching element (152).

10. The power conversion device (200) of any one of claims 1 to 7, wherein in the transformation circuit (205):

    the switching element (251) is connected to an output end of the rectifier (4)
    the reactor (51) is connected to the switching element (251) in series; and
    the backflow prevention element (252) is connected between the switching element (251) and the reactor (51).

11. The power conversion device (100) of claim 9, further comprising an intermediate voltage detector (70), which is configured to detect a voltage across the intermediate capacitor (155) as an intermediate voltage,

    wherein the converter control unit (110) further includes an intermediate command value calculation unit, which is configured to calculate an intermediate switching command value based on an intermediate voltage difference obtained by subtracting the intermediate voltage from an intermediate command value indicative of a target voltage value of the intermediate voltage, and
    wherein the switching control unit (130) is configured to generate a switching signal controlling an operation of the second switching element (151) and an operation of the third switching element (152), based on the switching command value, the intermediate switching command value, and the control amount.

12. The power conversion device (1, 100, 200) of any one of claims 1 to 11, wherein at least one of the switching element (53, 151, 152, 251) and the backflow prevention element (52, 153, 154, 252) includes a wide bandgap semiconductor.

13. An air-conditioning apparatus (60), comprising:

    the power conversion device (1, 100, 200) of any one of claims 1 to 12; and
    a refrigerant circuit, which includes a compressor to be driven with electric power supplied from the power conversion device (1, 100, 200), a heat source-side heat exchanger (62), an expansion valve (63), and a use-side heat exchanger (64) connected to one another in the stated order through refrigerant pipes, and is configured to allow refrigerant to be circulated therethrough.

**Patentansprüche**

1. Energieumwandlungseinrichtung (1, 100, 200), umfassend:

   einen Gleichrichter (4), der eingerichtet ist, eine von einer Dreiphasen-Wechselstromversorgung (2) zugeführte Wechselspannung gleichzurichten;

eine Transformationsschaltung (5, 105, 205), die zumindest eine Spule (51), ein Schaltelement (53, 151, 152, 251) und ein Rückflussverhinderungselement (52, 153, 154, 252) aufweist und eingerichtet ist, die in dem Gleichrichter (4) gleichgerichtete Spannung zu transformieren;

einen Glättungskondensator (6), der eingerichtet ist, eine Ausgangsspannung der Transformationsschaltung (5, 105, 205) zu glätten;

einen Inverter (7), der eingerichtet ist, eine in dem Glättungskondensator (6) geglättete Gleichspannung in eine Wechselspannung umzuwandeln;

einen Energieversorgungsspannungsdetektor (8), der eingerichtet ist, als eine Energieversorgungsspannung zumindest irgendeine von zumindest einer Leitungsspannung und zumindest einer Phasenspannung der Dreiphasen-Wechselstromversorgung (2) zu detektieren;

einen Ausgangsspannungsdetektor (9), der eingerichtet ist, die Ausgangsspannung der Transformationsschaltung (5, 105, 205) zu detektieren;

einen Stromdetektor (54), der eingerichtet ist, einen die Spule (51) durchfließenden Spulenstrom zu detektieren; und

eine Wandler-Regeleinheit (10, 110), die eingerichtet ist, einen Betrieb des Schaltelements (53, 151, 152, 251) zu regeln, um eine Stromabweichung des Spulenstroms von einem voreingestellten Stromwert nahe an eine voreingestellte Stromabweichung zu bringen auf Grundlage der Energieversorgungsspannung, der Ausgangsspannung und des Spulenstroms,
wobei die Wandler-Reglereinheit (10, 110) aufweist:

eine Strom-Regeleinheit (11), die eingerichtet ist, einen Strombefehlswert, angebend einen Zielstromwert des Spulenstroms, zu berechnen auf Grundlage einer Spannungsdifferenz, die erhalten wird durch Subtrahieren der Ausgangsspannung von einem Spannungsbefehlswert, angebend einen Zielspannungswert für die Ausgangsspannung;

eine Schaltbefehlswert-Regeleinheit (12), die eingerichtet ist, einen Schaltbefehlswert, angebend Informationen bezüglich des Betriebs des Schaltelements (53, 251, 152, 251), zu berechnen auf Grundlage der Stromabweichung, die erhalten wird durch Subtrahieren des Spulenstroms von dem Strombefehlswert;

eine Fehlerakkumulationseinheit (20), die eingerichtet ist, einen Regelbetrag zum Korrigieren des Schaltbefehlswertes zu generieren auf Grundlage der Energieversorgungsspannung und der Stromabweichung; und

eine Schaltregeleinheit (13, 130), die eingerichtet ist, ein Schaltsignal, regelnd den Betrieb des Schaltelements (53, 151, 152, 251), zu generieren auf Grundlage eines addierten Schaltbefehlswertes, der erhalten wird durch Addieren des Schaltbefehlswertes und des Regelbetrags, und

wobei die Fehlerakkumulationseinheit (20) aufweist:

eine Stromabweichung-Akkumulationsbetrag-Bestimmungseinheit (21), die eingerichtet ist, einen Fehlerbetrag, angebend einen Fehler in dem Spulenstrom, zu berechnen auf Grundlage der Stromabweichung durch miteinander Vergleichen der Stromabweichung und eines voreingestellten Schwellenwerts, und eingerichtet ist, einen Wert von Null als den Fehlerbetrag auszugeben, wenn die Stromabweichung gleich ist wie oder kleiner ist als der voreingestellte Schwellenwert, und die Stromabweichung als den Fehlerbetrag auszugeben, wenn die Stromabweichung größer ist als der voreingestellte Schwellenwert;

eine Stromabweichung-Akkumulationseinheit (25), die eine Vielzahl von Integratoren umfasst, die jeweils eingerichtet sind, den Fehlerbetrag für jeden Energieversorgungsphasenwinkel der Drehphasen-Wechselstromversorgung (2) zu akkumulieren, um den Regelbetrag zu generieren, wobei eine Anzahl von Integratoren der Vielzahl von Integratoren identisch sind mit einer Anzahl von Bereichen, in die eine Periode der Wechselspannung gemäß den jeweiligen Energieversorgungsphasenwinkeln unterteilt ist;

eine Energieversorgungsphasenwinkel-Berechnungseinheit (22), die eingerichtet ist, einen Energieversorgungsphasenwinkel der durch den Energieversorgungsspannungsdetektor (8) detektierten Energieversorgungsspannung zu berechnen auf Grundlage der detektierten Energieversorgungsspannung;

eine Eingabe-Auswahleinheit (23), die eingerichtet ist, zu veranlassen, dass ein Integrator entsprechend dem berechneten Energieversorgungsphasenwinkel unter der Vielzahl von Integratoren, die in der Stromabweichung-Akkumulationseinheit (25) enthalten sind, den Fehlerbetrag zu akkumulieren auf Grundlage des berechneten Energieversorgungsphasenwinkels; und

eine Ausgabe-Auswahleinheit (24), die eingerichtet ist, zu veranlassen, dass ein Integrator entsprechend dem berechneten Energieversorgungsphasenwinkel unter der Vielzahl der Integratoren, die in der Stromabweichung-Akkumulationseinheit (25) enthalten sind, den Regelbetrag auszugeben auf Grundlage des berechneten Energieversorgungsphasenwinkels.

**2.** Energieumwandlungseinrichtung (1, 100, 200) nach Anspruch 1, wobei die Ausgabe-Auswahleinheit (24) eingerichtet ist, zu veranlassen, dass ein Integrator entsprechend einem Phasenwinkel, der gegenüber dem berechneten Energieversorgungsphasenwinkel um eine Energieversorgungsperiode verzögert ist, den Regelbetrag ausgibt.

**3.** Energieumwandlungseinrichtung (1, 100, 200) nach Anspruch 1 oder 2, wobei die Ausgabe-Auswahleinheit (24) eingerichtet ist, zu veranlassen, dass ein Integrator entsprechend einem Phasenwinkel, der gegenüber dem Energieversorgungsphasenwinkel entsprechend dem durch die Eingabe-Auswahleinheit (23) ausgewählten Integrator um zwei Regelperioden voreilt, den Regelbetrag ausgibt.

**4.** Energieumwandlungseinrichtung (1, 100, 200) nach Anspruch 1, wobei die Stromabweichung-Akkumulationsbetrag-Bestimmungseinheit (21) eingerichtet ist, den voreingestellten Schwellenwert einzustellen, so dass eine harmonische Komponente einer vorherbestimmten Ordnung in einem Energieversorgungsstrom von der Drehphasen-Wechselstromversorgung (2) einen Wert hat, der gleich ist wie oder kleiner ist als ein voreingestellter Wert.

**5.** Energieumwandlungseinrichtung (1, 100, 200) nach einem der Ansprüche 1 bis 4, wobei eine Anzahl der Vielzahl von Integratoren, die für die Stromabweichung-Akkumulationseinheit (25) bereitgestellt sind, bestimmt ist auf Grundlage einer Periode der Energieversorgungsspannung und einer Regelperiode.

**6.** Energieumwandlungseinrichtung (1, 100, 200) nach einem der Ansprüche 1 bis 5, wobei die Strom-Regeleinheit (11) eingerichtet ist, eine von oder eine Kombination von zwei oder mehr von Proportionalregelung, Integralregelung und Differenzierregelung auf die Spannungsdifferenz durchzuführen, um den Strombefehlswert zu berechnen.

**7.** Energieumwandlungseinrichtung (1) nach einem der Ansprüche 1 bis 6, wobei die Schaltbefehlswert-Regeleinheit (12) eingerichtet ist, eine von oder eine Kombination von zwei oder mehr von Proportionalregelung, Integralregelung und Derivativregelung auf die Stromabweichung durchzuführen, um den Schaltbefehlswert zu berechnen.

**8.** Energieumwandlungseinrichtung (100) nach einem der Ansprüche 1 bis 7, wobei in der Transformationsschaltung (5):

    die Spule (51) mit einem Ausgangsende des Gleichrichters (4) verbunden ist,
    das Rückflussverhinderungselement (52) mit der Spule (51) in Reihe verbunden ist,
    und
    das Schaltelement (53) zwischen der Spule (51) und dem Rückflussverhinderungselement (52) verbunden ist.

**9.** Energieumwandlungseinrichtung (100) nach einem der Ansprüche 1 bis 7, wobei in der Transformationsschaltung (105):

    die Spule (51) mit einem Ausgangsende des Gleichrichters (4) verbunden ist;
    das Rückflussverhinderungselement ein zweites Rückflussverhinderungselement (153) und ein drittes Rückflussverhinderungselement (154) umfasst, die in Reihe miteinander verbunden sind und in Reihe mit der Spule (51) verbunden sind;
    das Schaltelement ein zweites Schaltelement (151) und ein drittes Schaltelement (152) umfasst, die in Reihe miteinander verbunden sind und zwischen der Spule (51) und dem zweiten Rückflussverhinderungselement (153) verbunden sind; und
    ein Zwischenkondensator enthalten ist, der zwischen dem zweiten Rückflussverhinderungselement (153) und dem dritten Rückflussverhinderungselement (154) und zwischen dem zweiten Schaltelement (151) und dem dritten Schaltelement (152) verbunden ist.

**10.** Energieumwandlungseinrichtung (200) nach einem der Ansprüche 1 bis 7, wobei in der Transformationsschaltung (205):

    das Schaltelement (251) mit einem Ausgangsende des Gleichrichters (4) verbunden ist,
    die Spule (51) mit dem Schaltelement (251) in Reihe verbunden ist; und
    das Rückflussverhinderungselement (252) zwischen dem Schaltelement (251) und der Spule (51) verbunden ist.

**11.** Energieumwandlungseinrichtung (100) nach Anspruch 9, ferner umfassend einen Zwischenspannungsdetektor (70), der eingerichtet ist, eine Spannung über den Zwischenkondensator (155) als eine Zwischenspannung zu detektieren,

wobei die Konverter-Regeleinheit (110) ferner eine Zwischenbefehlswert-Berechnungseinheit umfasst, die eingerichtet ist, einen Zwischenschaltbefehlswert zu berechnen auf Grundlage einer Zwischenspannungsdifferenz, die erhalten wird durch Subtrahieren der Zwischenspannung von einem Zwischenbefehlswert, angebend einen Zielspannungswert der Zwischenspannung, und
wobei die Schaltregeleinheit (130) eingerichtet ist, ein Schaltsignal, regelnd einen Betrieb des zweiten Schaltelements (151) und einen Betrieb des dritten Schaltelements (152), zu generieren auf Grundlage des Schaltbefehlswerts, des Zwischenschaltbefehlswerts und des Regelbetrags.

**12.** Energieumwandlungseinrichtung (1, 100, 200) nach einem der Ansprüche 1 bis 11, wobei zumindest eines von dem Schaltelement (53, 151, 152, 251) und dem Rückflussverhinderungselement (52, 153, 154, 252) einen Halbleiter mit breiter Bandlücke umfasst.

**13.** Klimaanlage (60), umfassend:

die Energieumwandlungsrichtung (1, 100, 200) nach einem der Ansprüche 1 bis 12; und
einen Kältemittelkreislauf, der einen Verdichter, der mit elektrischer Energie zu betreiben ist, die von der Energieumwandlungseinrichtung (1, 100, 200) zugeführt wird, einen wärmequellenseitigen Wärmetauscher (62), ein Expansionsventil (63) und einen nutzungsseitigen Wärmetauscher (64) umfasst, die in der angegebenen Reihenfolge über Kältemittelleitungen miteinander verbunden sind, und der eingerichtet ist, zu ermöglichen, dass Kältemittel hindurch zirkuliert werden kann.


**Revendications**

**1.** Dispositif de conversion de puissance (1, 100, 200), comprenant :

un redresseur (4), qui est conçu pour redresser une tension alternative fournie par une alimentation électrique en courant alternatif triphasé (2) ;
un circuit de transformation (5, 105, 205), qui comprend au moins une bobine de réactance (51), un élément de commutation (53, 151, 152, 251), et un élément de prévention de courant inverse (52, 153, 154, 252), et est configuré pour transformer la tension redressée dans le redresseur (4) ;
un condensateur de lissage (6), qui est conçu pour lisser une tension de sortie provenant du circuit de transformation (5, 105, 205) ;
un onduleur (7), qui est conçu pour convertir une tension continue lissée dans le condensateur de lissage (6) en une tension alternative ;
un détecteur de tension d'alimentation (8), qui est conçu pour détecter, en tant que tension d'alimentation, au moins l'une quelconque d'au moins une tension d'alimentation et d'au moins une tension de phase de l'alimentation électrique en courant alternatif triphasé (2) ;
un détecteur de tension de sortie (9), qui est conçu pour détecter la tension de sortie du circuit de transformation (5, 105, 205) ;
un détecteur de courant (54), qui est conçu pour détecter un courant de bobine de réactance circulant à travers la bobine de réactance (51) ; et
une unité de commande de convertisseur (10, 110), qui est conçue pour commander un fonctionnement de l'élément de commutation (53, 151, 152, 251) de manière qu'un écart de courant du courant de bobine de réactance par rapport à une valeur de courant prédéfinie soit proche d'un écart de courant prédéfini sur la base de la tension d'alimentation, de la tension de sortie et du courant de bobine de réactance,
dans lequel l'unité de commande de convertisseur (10, 110) comprend :

une unité de commande de courant (11), qui est conçue pour calculer une valeur de commande de courant indicative d'une valeur de courant cible du courant de bobine de réactance sur la base d'une différence de tension obtenue en soustrayant la tension de sortie d'une valeur de commande de tension indicative d'une valeur de tension cible pour la tension de sortie ;
une unité de commande de valeur de commande de commutation (12), qui est configurée pour calculer une valeur de commande de commutation indicative d'informations relatives au fonctionnement de l'élément de commutation (53, 251, 152, 251) sur la base de l'écart de courant obtenu en soustrayant le courant de bobine de réactance de la valeur de commande de courant ;
une unité d'accumulation d'erreurs (20), qui est conçue pour générer une quantité de commande pour corriger la valeur de commande de commutation sur la base de la tension d'alimentation et de l'écart de courant ; et

une unité de commande de commutation (13, 130), qui est configurée pour générer un signal de commutation commandant le fonctionnement de l'élément de commutation (53, 151, 152, 251) sur la base d'une valeur de commande de commutation ajoutée obtenue en ajoutant la valeur de commande de commutation et la quantité de commande, et

dans lequel l'unité d'accumulation d'erreurs (20) comprend :

une unité de détermination de quantité d'accumulation d'écart de courant (21), qui est conçue pour déterminer une quantité d'erreur indicative d'une erreur dans le courant de bobine de réactance sur la base de l'écart de courant en comparant l'écart de courant et une valeur de seuil prédéfinie l'un avec l'autre, et étant conçue pour sortir une valeur de zéro comme la quantité d'erreur lorsque l'écart de courant est égal ou inférieur à la valeur de seuil prédéfinie et pour sortir l'écart de courant comme la quantité d'erreur lorsque l'écart de courant est supérieur à la valeur seuil prédéfinie ;

une unité d'accumulation d'écart de courant (25), qui comprend une pluralité d'intégrateurs, chacun étant conçu pour accumuler la quantité d'erreur pour chaque angle de phase d'alimentation de l'alimentation électrique en courant alternatif triphasé (2) pour générer la quantité de commande, dans lequel un nombre d'intégrateurs de la pluralité d'intégrateurs est identique à un nombre de plages dans lesquelles une période de la tension alternative est divisée conformément aux angles de phase d'alimentation respectifs ;

une unité de calcul d'angle de phase d'alimentation électrique (22), qui est conçue pour calculer un angle de phase d'alimentation électrique de la tension d'alimentation électrique détectée par le détecteur de tension d'alimentation électrique (8) sur la base de la tension d'alimentation électrique détectée ;

une unité de sélection d'entrée (23), qui est conçue pour amener un intégrateur correspondant à l'angle de phase d'alimentation électrique calculé parmi la pluralité d'intégrateurs compris dans l'unité d'accumulation d'écart de courant (25) à accumuler la quantité d'erreur, sur la base de l'angle de phase d'alimentation électrique calculé ;

et une unité de sélection de sortie (24), qui est conçue pour amener un intégrateur correspondant à l'angle de phase d'alimentation électrique calculé parmi la pluralité d'intégrateurs compris dans l'unité d'accumulation d'écart de courant (25) à sortir la quantité de commande, sur la base de l'angle de phase d'alimentation électrique calculé.

2. Dispositif de conversion de puissance (1, 100, 200) selon la revendication 1, dans lequel l'unité de sélection de sortie (24) est conçue pour amener un intégrateur correspondant à un angle de phase retardé d'une période d'alimentation par rapport à l'angle de phase d'alimentation calculé à sortir la quantité de commande.

3. Dispositif de conversion de puissance (1, 100, 200) selon la revendication 1 ou 2, dans lequel l'unité de sélection de sortie (24) est conçue pour amener un intégrateur correspondant à un angle de phase avancé par rapport à l'angle de phase de l'alimentation électrique correspondant à l'intégrateur sélectionné par l'unité de sélection d'entrée (23) de deux périodes de commande, à sortir la quantité de commande.

4. Dispositif de conversion de puissance (1, 100, 200) selon la revendication 1, dans lequel l'unité de détermination de quantité d'accumulation d'écart de courant (21) est conçue pour définir la valeur de seuil prédéfinie de sorte qu'une composante harmonique d'un ordre prédéterminé dans un courant d'alimentation provenant de l'alimentation électrique en courant alternatif triphasé (2) a une valeur égale ou inférieure à une valeur prédéfinie.

5. Dispositif de conversion de puissance (1, 100, 200) selon l'une quelconque des revendications 1 à 4, dans lequel un nombre de la pluralité d'intégrateurs fournis à l'unité d'accumulation d'écart de courant (25) est déterminé sur la base d'une période de la tension d'alimentation et d'une période de commande.

6. Dispositif de conversion de puissance (1, 100, 200) selon l'une quelconque des revendications 1 à 5, dans lequel l'unité de commande de courant (11) est conçue pour effectuer une commande parmi, ou une combinaison de deux commandes ou plus parmi, une commande proportionnelle, une commande intégrale, et une commande dérivée sur la différence de tension pour calculer la valeur de commande de courant.

7. Dispositif de conversion de puissance (1) selon l'une quelconque des revendications 1 à 6, dans lequel l'unité de commande de valeur de commande de commutation (12) est conçue pour effectuer une commande parmi, ou une combinaison de deux commandes ou plus parmi, une commande proportionnelle, une commande intégrale et une commande dérivée sur l'écart de courant pour calculer la valeur de commande de commutation.

8. Dispositif de conversion de puissance (100) de l'une quelconque des revendications 1 à 7, dans lequel dans le circuit de transformation (5) :

la bobine de réactance (51) est connectée à une extrémité de sortie du redresseur (4) ;
l'élément de prévention de courant inverse (52) est connecté à la bobine de réactance (51) en série et et
l'élément de commutation (53) est connecté entre la bobine de réactance (51) et l'élément de prévention de courant inverse (52).

9. Dispositif de conversion de puissance (100) de l'une quelconque des revendications 1 à 7, dans lequel dans le circuit de transformation (105) :

la bobine de réactance (51) est connectée à une extrémité de sortie du redresseur (4) ;
l'élément de prévention de courant inverse comprend un deuxième élément de prévention de courant inverse (153) et un troisième élément de prévention de courant inverse (154), qui sont connectés l'un à l'autre en série et sont connectés à la bobine de réactance (51) en série ;
l'élément de commutation comprend un deuxième élément de commutation (151) et un troisième élément de commutation (152), qui sont connectés l'un à l'autre en série et sont connectés entre la bobine de réactance (51) et le deuxième élément de prévention de courant inverse (153) ; et
un condensateur intermédiaire est compris et est connecté entre le deuxième élément de prévention de courant inverse (153) et le troisième élément de prévention de courant inverse (154) et entre le deuxième élément de commutation (151) et le troisième élément de commutation (152).

10. Dispositif de conversion de puissance (200) de l'une quelconque des revendications 1 à 7, dans lequel dans le circuit de transformation (205) :

l'élément de commutation (251) est connecté à une extrémité de sortie du redresseur (4) ;
le réacteur (51) est connecté en série à l'élément de commutation (251) ; et
l'élément de prévention de courant inverse (252) est connecté entre l'élément de commutation (251) et la bobine de réactance (51).

11. Dispositif de conversion de puissance (100) selon la revendication 9, comprenant en outre un détecteur de tension intermédiaire (70), qui est conçu pour détecter une tension aux bornes du condensateur intermédiaire (155) comme une tension intermédiaire,

dans lequel l'unité de commande de convertisseur (110) comprend en outre une unité de calcul de valeur de commande intermédiaire, qui est conçue pour calculer une valeur de commande de commutation intermédiaire sur la base d'une différence de tension intermédiaire obtenue en soustrayant la tension intermédiaire d'une valeur de commande intermédiaire indicative d'une valeur de tension cible de la tension intermédiaire, et
dans lequel l'unité de commande de commutation (130) est conçue pour générer un signal de commutation commandant un fonctionnement du deuxième élément de commutation (151) et un fonctionnement du troisième élément de commutation (152), sur la base de la valeur de commande de commutation, de la valeur de commande de commutation intermédiaire, et de la quantité de commande.

12. Dispositif de conversion de puissance (1, 100, 200) selon l'une quelconque des revendications 1 à 11, dans lequel au moins l'un de l'élément de commutation (53, 151, 152, 251) et de l'élément de prévention de courant inverse (52, 153, 154, 252) comprend un semi-conducteur à large bande interdite.

13. Appareil de climatisation (60), comprenant :

le dispositif de conversion de puissance (1, 100, 200) selon l'une quelconque des revendications 1 à 12 ; et
un circuit de réfrigérant, qui comprend un compresseur devant être entraîné par une énergie électrique fournie par le dispositif de conversion d'énergie (1, 100, 200), un échangeur de chaleur côté source de chaleur (62), une soupape d'expansion (63), et un échangeur de chaleur côté utilisation (64) reliés les uns aux autres dans l'ordre indiqué par des tuyaux de réfrigérant, et est conçu pour permettre au réfrigérant de circuler à travers celui-ci.

FIG. 1

FIG. 2

## FIG. 3

START

ST1
INPUT $I^*_L - I_L$

ST2
THRESHOLD VALUE OR SMALLER?

No

Yes

ST3
ERROR AMOUNT → 0

ST4
ERROR AMOUNT → $I^*_L - I_L$

END

## FIG. 4

60

2

1
POWER CONVERSION DEVICE

61

3
M   COM-PRESSOR

64

63

62

FIG. 5

EP 3 419 158 B1

CONVERTER CONTROL UNIT

FIG. 6

# FIG. 7

EP 3 419 158 B1

CONVERTER CONTROL UNIT

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2869498 B
- US 20070103947 A1
- EP 3358732 A1